# EUROPÄISCHE PATENTSCHRIFT

(11) **EP 4 668 034 B1**
(45) Veröffentlichungstag und Bekanntmachung des Hinweises auf die Patenterteilung: **04.11.2026**
(21) Anmeldenummer: 24183799.6
(22) Anmeldetag: 21.06.2024
(51) Int. Cl.: G05B 19/042, G06N 3/08

(54) **VERFAHREN ZUR KI-GESTÜTZTEN AUTOMATISIERBAREN PARAMETRIERUNG EINES FELDGERÄTES, INSBESONDERE EINES IO-LINK-GERÄTES**
METHOD FOR AI-SUPPORTED AUTOMATABLE PARAMETERISATION OF A FIELD DEVICE, IN PARTICULAR AN IO LINK DEVICE
PROCÉDÉ DE PARAMÉTRAGE AUTOMATIQUE ASSISTÉ PAR KI D'UN APPAREIL DE TERRAIN, EN PARTICULIER D'UN APPAREIL À LIAISON E/S

(43) Veröffentlichungstag der Anmeldung: 24.12.2025
(73) Patentinhaber: Balluff GmbH, 73765 Neuhausen auf der Fildern (DE)
(72) Erfinder: Track, Dominik, 73779 Deizisau (DE); Eger, Timo, 72127 Kusterdingen (DE); Mohr, Tobias, 74357 Bönnigheim (DE); Schaefer, Roland, 78628 Rottweil (DE); Meißner, Thomas, 71065 Sindelfingen (DE); Wohlfahrt, Ellen, 70374 Stuttgart (DE); Jung, Markus, 85622 Feldkirchen (DE); Czink, Blasius, 73760 Ostfildern (DE); Reveles, Ricardo, 76240 El Marqués, Querétaro (MX)
(74) Vertreter: Jakelski & Althoff Patentanwälte PartG mbB

(56) Entgegenhaltungen:
- CN-A- 117 520 488
- DE-A1- 102013 014 214
- DE-A1- 102013 112 875

## Beschreibung

Die Erfindung betrifft die Konfiguration bzw. Parametrierung eines Feldgerätes, insbesondere eines IO-Link-Gerätes wie z.B. einer über ein IO-Link-Kommunikationssystem kommunikationstechnisch verbundenen Sensoranordnung zur Überwachung des Zustandes einer technischen Einrichtung.

### Stand der Technik

Sensoranordnungen z.B. zur Überwachung des Zustandes einer technischen Einrichtung mittels einer an sich bekannten "IO-Link"- Kommunikationsverbindung sind im Stand der Technik bekannt. Über eine "IO-Link"-Verbindung lassen sich solche Sensoranordnungen einfach und schnell anschließen und relativ einfach und zuverlässig in eine bestehende technische Einrichtung einbinden.

So erfassen z.B. von der vorliegenden Anmelderin entwickelte "Condition Monitoring Sensoren" unterschiedliche physikalische Größen, z.B. die Vibration, die Temperatur, die Luftfeuchtigkeit und/oder den Umgebungsdruck einer technischen Einrichtung. Dadurch kann der technische Zustand z.B. einer Maschine, einer Industrieanlage sowie von zugehörigen Komponenten überwacht werden. Die Condition Monitoring Sensoren ermöglichen somit einen effizienten und störungsfreien Betrieb einer solchen Maschine oder Anlage und steigern dadurch erheblich deren Effektivität.

Die von den Condition Monitoring Sensoren erfassten physikalischen Größen werden z.B. von diesen mittels einer dort integrierten Auswerteelektronik vorverarbeitet und interpretiert und liefern so entsprechende Ergebnisdaten über einen IO-Link an ein übergeordnetes System der jeweiligen Maschine oder Anlage.

Anhand eines standardisierten "IO-Link"-Protokolls können diese Sensoren komfortabel parametriert werden und die Auswertung im Sensor dabei individuell auf die jeweilige technische Applikation bzw. den Einsatzzweck abgestimmt werden.

Die Verwendung einer "IO-Link-Verbindung" zur Anbindung von sogenannten "IO-Link-Devices" ist z.B. aus der DE 10 2009 013 303 A1 bekannt. Diese "Devices" sind an sich bekannte Sensoren und Aktoren. Die Anbindung weiterer Feldgeräte, insbesondere auch sicherheitsrelevanter Feldgeräte, die eine Parametrisierung erfordern, geschieht im Stand der Technik auf konventionelle Art, d. h. durch direkte Anbindung an einen Feldbus oder über die an sich bekannte Programmierschnittstelle REST-API.

Gemäß dem Stand der Technik gibt es zwei Möglichkeiten, hier betroffene IO-Link Geräte zu parametrieren. In beiden Ansätzen müssen einzelne Parameter (häufig mehrere) angepasst werden.

Zum einen kann die Parametrierung über eine IO-Link Gerätebeschreibungsdatei (IODD) erfolgen. Das Format der IODD ist durch das "IO-Link Konsortium" standardisiert und kann von entsprechenden Softwaremodulen grafisch interpretiert werden. Hier wird eine Liste aller in der IODD beschriebenen Parameter (eventuell mit Gruppierungen) aufgebaut. Die einzelnen Parameter werden mit Namen und dem jeweiligen Register dargestellt. Die Werte können im zulässigen Bereich geändert und auf das Gerät geschrieben werden. Der Anwender muss die Bedeutung und Auswirkung der einzelnen Parameter durch die bereitgestellte Dokumentation (Handbuch) selbst nachvollziehen und auf die Anwendung beziehen.

Alternativ kann die Parametrierung ohne eine IODD, und zwar über eine Steuerung oder ein entsprechendes Softwaremodul erfolgen. Bei dieser Vorgehensweise müssen jedoch die Register manuell aus der Dokumentation entnommen und die entsprechenden Werte in die Sensoren geschrieben werden. Diese Methode wird häufig bei weniger komplexen IO-Link-Sensoren angewendet. Die Parametrierung erfolgt hier in der Regel direkt über ein in einer speicherprogrammierbaren Steuerung (SPS) vorgesehenes Steuerungsprogramm.

Die DE 10 2013 112 875 A1 offenbart ein Adaptersystem mit Feldgeräten, das heißt Sensoren und/oder Aktoren, die über ein Kabel mit einem Master in einem System zusammenwirken, zur Automation von Anlagen und/oder Prozessen sowie eine Kontrolleinheit. Zur Erleichterung der Inbetriebnahme, Wartung und Parametrierung der Feldgeräte ist die Kontrolleinheit dazu ausgebildet, eine drahtlose Verbindung zu einem intelligenten mobilen Endgerät - insbesondere einem Smartphone oder Tablet-Computer - aufzubauen. Sie verfügt außerdem über eine Schnittstelle zu mindestens einem Feldgerät.

Die CN 117 520 488 A betrifft ein Frage-Antwort-Verfahren, ein Frage-Antwort-System sowie ein computerlesbares Speichermedium und bezieht sich auf den technischen Bereich der künstlichen Intelligenz. Das Frage-Antwort-Verfahren umfasst die folgenden Schritte:
- Erhalt einer Anfrageaussage,
- Abruf eines zugehörigen Abfrage-Satzes aus einer voreingestellten Wissensbasis auf Grundlage der Anfrageaussage. Der Abfrage-Satz umfasst Frage-Sätze, die auf Grundlage von Dokument-Segmenten durch ein erstes großes Sprachmodell generiert wurden,
- Bestimmung einer zweiten voreingestellten Anzahl von Zieldokumentsegmenten mit der höchsten Ähnlichkeit zum Abfrage-Satz,
- Eingabe der Anfrageaussage und der zweiten voreingestellten Anzahl von Zieldokumentsegmenten in ein zweites großes Sprachmodell, um Antwortinhalte zu generieren.

Durch das Verfahren kann die Konsistenz zwischen Benutzerfrage und Datenausdrucksmodus in der Wissensdatenbank verbessert werden und der Abgleichseffekt während der Abfrage des Frage-Antwort-Systems wird optimiert.

### Offenbarung der Erfindung

Der Erfindung liegt die Aufgabe zugrunde, die automatisierbare bzw. automatisierte Parametrierung insbesondere hier betroffener Feldgeräte, insbesondere von IO-Link-Geräten, einschließlich weiterer Feldgeräte und insbesondere auch sicherheitsrelevanter Feldgeräte, möglichst vereinfacht und mit möglichst geringem technischem Aufwand oder bei geringen technischen Kenntnissen eines jeweiligen Benutzers oder Inbetriebnehmers zu ermöglichen. Dabei sollen insbesondere auch die technischen Erfordernisse bei der Installation solcher Geräte bzw. Einrichtung solcher Geräte für eine geänderte oder neue Anwendung bzw. Einsatzzweck vereinfacht werden.

Die Erfindung schlägt somit ein Verfahren zur vereinfachten bzw. möglichst automatisierbaren Konfiguration bzw. Parametrierung eines oder mehrerer hier betroffener Feldgeräte, insbesondere IO-Link-Geräte, wie z.B. einer eingangs genannten IO-Link-basierten Sensoranordnung/-vorrichtung, vor. Dabei wird angenommen, dass die entsprechenden Feldgeräte bzw. IO-Link-Geräte, z.B. genannte Sensoren, über die Fähigkeit verfügen, erfasste Daten on-Board vor- bzw. weiterzuverarbeiten. Eine solche Weiterverarbeitung umfasst auch das Setzen von Schaltsignalen z.B. in einem Längen- bzw. Positionsmesssystem. Das vorgeschlagene Verfahren ermöglicht es, die Konfiguration bzw. Parametrierung solcher Geräte nicht nur am Gerät selbst, sondern auch von extern durchzuführen. Durch die entsprechende Einstellung einzelner Parameter ist es zudem möglich, eine in einem genannten Sensor vorgesehene on-Board Datenvorverarbeitung oder Datenauswertung an die Erfordernisse der jeweiligen Anwendung bzw. des jeweiligen Einsatzzwecks anzupassen.

Dabei ist anzumerken, dass die Konfiguration/Parametrierung von komplexen IO-Link-Geräten, wie den eingangs genannten Condition Monitoring Sensoren, eine nicht unerhebliche Transferleistung für den jeweiligen Anwender bzw. Nutzer erfordert, um jeweils applikationsspezifisches Wissen in einzelne technische Sensorparameter zu überführen. Um diese Transferleistung erbringen zu können, benötigt der Nutzer insbesondere fachliches Expertenwissen über die jeweilige Anwendung bzw. den Einsatzzweck, z.B. bei einer Zustandsüberwachung einer Maschine oder eines Anlagenteils mittels einer Vibrationsanalyse, sowie über das bzw. die entsprechend zu parametrierenden IO-Link-Geräte, z.B. Vibrationssensoren. Der Anwender bzw. Nutzer muss hierzu sämtliche für die Anwendung relevanten Parameter identifizieren, deren Bedeutung und Auswirkung auf den Einsatzzweck bzw. den Anwendungsfall anhand einer meist vorliegenden Dokumentation richtig interpretieren, die für den Einsatzzweck bzw. Anwendungsfall passenden Parameterwerte auswählen, und die so ausgewählten Parameter nacheinander in der richtigen Reihenfolge auf das entsprechende IO-Link-Gerät (z.B. Sensor) übertragen bzw. aufspielen. Hierbei müssen zudem Abhängigkeiten zwischen den Parametern berücksichtigt werden.

Bei dem hier vorgeschlagenen Verfahren wird mittels eines auf Generativer Künstlicher Intelligenz (KI) beruhenden Konfigurationsassistenten der von der jeweiligen Anwendung, z.B. Überwachungsanwendung, abhängige Dateneingang bzw. Dateninput automatisch in einen geeigneten Parametersatz umgewandelt, welcher auf den jeweiligen Sensor aufgespielt werden kann. Über die dabei aufgespielten einzelnen Parameter werden die für die DatenVorverarbeitung auf dem Sensor sowie für die Datenübertragung der entsprechend vorverarbeiteten Sensordaten, entsprechend der jeweiligen Anwendung, mittels Berechnung voreingestellt.

Gemäß einem ersten Aspekt des erfindungsgemäßen computerimplementierten Verfahrens zur automatisierbaren Parametrierung wenigstens eines über eine digitale Schnittstelle mit einem Kommunikationsnetzwerk kommunikationstechnisch verbundenen Feldgerätes für einen vorgegebenen Einsatzzweck des wenigstens einen Feldgerätes, ist insbesondere vorgesehen, dass das Verfahren mittels eines ein Large-Language-Model (LLM) aufweisenden und auf Generativer Künstlicher Intelligenz (GenKl) beruhenden Konfigurationsassistenten erfolgt, wobei das Verfahren folgende Schritte umfasst:
Trainieren eines transformerbasierten Parametrierungsmodells anhand von betriebsrelevanten und/oder produktrelevanten Daten des wenigstens einen Feldgerätes oder Optimieren eines vorhandenen transformerbasierten Parametrierungsmodells anhand solcher Daten;
Bereitstellen, über eine Computerschnittstelle, des trainierten oder optimierten transformerbasierten Parametrierungsmodells, welches mindestens eine Transformerkomponente umfasst;
Kommunizieren eines Benutzers mit dem Konfigurationsassistenten in natürlicher Sprache, über die Computerschnittstelle, zur Erfassung von Daten bezüglich des vorgegebenen Einsatzzwecks des wenigstens einen Feldgerätes; Veranlassen des trainierten, transformerbasierten Parametrierungsmodells, unter Verwendung der erfassten Daten für den vorgegebenen Einsatzzweck, optimierte Parametrierungsdaten auszugeben;
Freigeben der von dem trainierten, transformerbasierten Parametrierungsmodell ausgegebenen, optimierten Parametrierungsdaten für die automatisierbare Parametrierung des wenigstens einen Feldgerätes.

Als betriebsrelevante und/oder produktrelevante Daten des wenigstens einen Feldgerätes können beispielsweise Betriebsanleitungen, Datenblätter oder ähnliche produktrelevante Dokumente dienen.

Der genannten Trainingsschritt wird bevorzugt vorab, d.h. vor der Durchführung einer automatisierbaren Parametrierung des wenigstens einen Feldgerätes, durchgeführt.

Das wenigstens eine Feldgerät kann ein IO-Link-Gerät sein, welches über ein IO-Link-Kommunikationssystem kommunikationstechnisch mit einem IO-Link-Master verbunden ist. Mittels eines solchen standardmäßigen Kommunikationssystems kann ein damit verbundenes IO-Link-Gerät gemäß dem erfindungsgemäßen Verfahren extern und automatisierbar, und zwar für einen vorgegebenen Einsatzzweck optimiert, parametriert werden.

Dieses Verfahren hat den Vorteil, dass eine KI-geführte Konfiguration nicht nur von einfachen IO-Link-Sensoren (sog. "Click-Clack" IO-Link-Sensoren), sondern auch von komplexeren für die Kommunikation über ein IO-Link-System geeigneten oder nicht geeigneten Sensoren oder Feldgeräten, z.B. von eingangs genannten Condition Monitoring Sensoren, ermöglicht wird. Solche komplexeren Sensoren bzw. Feldgeräte können z.B. zur Erfassung von Vibration, Temperatur, Einbaulage, Betriebsstunden und ähnlichen Betriebsdaten dienen. Erfindungsgemäß können für den jeweiligen Einsatzzweck bzw. Anwendungsfall eines solchen einfacheren oder komplexeren Feldgerätes passende bzw. optimierte Parameterwerte gefunden werden.

Hierdurch können insbesondere automatisch auch komplexe Abhängigkeiten zwischen den Parametern berücksichtigt werden. Dabei kann es sich um weitere technische Erfordernisse oder Gegebenheiten hinsichtlich des Einsatzzwecks handeln oder um für die Parametrierung relevante Informationen, z.B. Randbedingungen beim Betrieb eines hier betroffenen Feldgerätes.

Darüber hinaus bietet das erfindungsgemäße Verfahren dem Nutzer z.B. eines hier betroffenen Sensorsystems einen erhöhten Nutzen, da es eine kürzere Installationszeit, weniger Fehlerquellen bei der Installation und eine sofortige Betriebsbereitschaft ermöglicht.

Gemäß einem weiteren Aspekt des erfindungsgemäßen Verfahrens kann vorgesehen sein, dass das Trainieren des Parametrierungsmodells unter Verwendung einer Deep-Learning- und/oder Reinforcement-Learning-Technologie erfolgt. Der Einsatz dieser Lernmethoden hat gegenüber einfachen (bzw. nicht-generativen) Maschinenlernansätzen, die sich am besten für klar definierte Aufgaben mit strukturierten Daten eignen, den Vorteil, dass sie sich auch für komplexere Aufgaben eignen, bei denen das Kl-basierte Computersystem unstrukturierte Daten verstehen muss. So wird beim Deep Learning bei der Verarbeitung von Daten und der Erstellung von entsprechenden Mustern die Funktionsweise des menschlichen Gehirns imitiert, wobei die Muster und Beziehungen in einem Datensatz aus von Menschen erstellten Inhalten ermittelt werden. Anhand der so erlernten Muster werden mittels der Generativen KI neue Inhalte erzeugt. Das Trainieren eines generativen Kl-Modells erfolgt meist unter Verwendung eines überwachten Lernansatzes. Die genannte Reinforcement-Learning-Technologie ahmt Lernprozesse nach, mit denen Menschen durch Versuch und Irrtum (d.h. "trial and error") Probleme lösen bzw. Ziele erreichen.

Gemäß einem weiteren Aspekt des erfindungsgemäßen Verfahrens kann vorgesehen sein, dass das Erzeugen eines trainierten Parametrierungsmodells zusätzlich durch Stichprobenziehung aus einer erlernten Wahrscheinlichkeitsverteilung von Parameterwerten erfolgt. Diese Vorgehensweise hat den Vorteil, dass bereits erlerntes "Vorwissen" integriert werden kann. Normalerweise lernt künstliche Intelligenz (KI) blind aus einer großen Anzahl von Stichproben, aber in vorliegenden Anwendungsszenarien sind diese großen Datensätze nicht verfügbar, allerdings eine Menge theoretischen Wissens zur Parametrierung. Diese theoretischen Informationen können daher vor dem Trainieren eines Parametrierungsmodells in die KI integriert werden, um eine bessere Interpretation der verfügbaren Daten zu ermöglichen, auch wenn diese knapp sind. Dabei kann zudem mittels Bayes'scher Statistik ermittelt werden, wie das entsprechende Vorwissen optimal genutzt werden kann, so dass ein hier betroffenes Parametrierungsmodell mit erheblich weniger Daten effizient trainiert werden kann. Eine genannte Stichprobenziehung kann mittels systematischer Zufallsverfahren, z.B. durch einen Zufallsgenerator, erfolgen.

Gemäß einem weiteren Aspekt des erfindungsgemäßen Verfahrens kann vorgesehen sein, dass rohe, auf einem vorgegebenen Parametersatz basierende Daten von einer Vorverarbeitungseinrichtung vorverarbeitet werden, um die auf dem Parametersatz basierenden Trainingsdaten bereitzustellen. Für die Qualität von mittels GenKl erzeugten Parameterdaten ist es vorteilhaft, für die Parametrierung geeignete und korrekte Daten zu beschaffen und diese zu verarbeiten, denn die Qualität dieser Daten ist auch für die Qualität der Parametrierung von Bedeutung. Bei der Vorverarbeitung dieser Daten ist es vorteilhaft, wenn die Daten so aufbereitet werden, dass sie für das Trainieren des GenKI-Systems leicht auszuwerten sind.

Gemäß einem weiteren Aspekt des erfindungsgemäßen Verfahrens kann vorgesehen sein, dass eine Eingabeaufforderung (sog. "Prompt") an den Benutzer einen oder mehrere Kontexte umfasst, welche sich auf weitere Informationen bezüglich des vorgegebenen Einsatzzwecks beziehen. Denn das Ergebnis einer Generativen KI ist nur so gut wie ein vom Benutzer der GenKl eingegebener Prompt. Das Ergebnis kann im vorliegenden Fall insbesondere durch Kontextinformationen zum jeweils betroffenen Einsatzzweck erheblich verbessert werden.

Gemäß einem weiteren Aspekt des erfindungsgemäßen Verfahrens kann vorgesehen sein, dass das Verfahren das Aktualisieren der auf dem Parametersatz basierenden Trainingsdaten und das Veranlassen des trainierten, transformerbasierten Parametrierungsmodells zum erneuten Trainieren, auf der Grundlage eines aktualisierten Parametersatzes, umfasst. Durch wiederholtes, erneutes Trainieren des Parametrierungsmodells auf der Grundlage von aktuellen Parameterdaten kann die Qualität der mittels GenKl ermittelten Parametersätze erheblich verbessert werden. Dabei kann zudem vorgesehen sein, dass das erneute Trainieren eines bereits trainierten, transformerbasierten Parametrierungsmodells entweder ein geplantes erneutes Training, ein kontinuierliches erneutes Training, oder ein auslöserbasiertes erneutes Training ist. Ferner kann dabei vorgesehen sein, dass der Auslöser für ein auslöserbasiertes erneutes Training auf einem Schwellenwert und einer Bewertung basiert, welche sich auf Konfigurations- oder Parametrierungsanweisungen beziehen, die von dem trainierten, transformerbasierten Parametrierungsmodell bereitgestellt werden.

Die Erfindung betrifft auch ein computerimplementiertes Verfahren zur Verwendung eines, wie vorhergehend beschrieben, trainierten transformerbasierten Parametrierungsmodells zur Generierung eines für einen vorgegebenen Einsatzzweck geeigneten Parametersatzes für den Betrieb wenigstens eines über eine digitale Schnittstelle eines Kommunikationsnetzwerkes kommunikationstechnisch verbundenen Feldgerätes, wobei dieses Verfahren folgende Schritte umfasst:
Bereitstellen des Zugriffs eines Benutzers auf ein trainiertes, transformerbasiertes Parametrierungsmodells mittels eines Computerprozessors;
Empfangen, über eine Computerschnittstelle, eingegebener Daten zu dem vorgegebenen Einsatzzweck;
Veranlassen des trainierten, transformerbasierten Parametrierungsmodells, die eingegebenen Daten zu analysieren und Anweisungen zum Generieren eines neuen oder geänderten Parametersatzes, basierend auf dem trainierten Parametrierungsmodell bereitzustellen.

Gemäß einem weiteren Aspekt dieses erfindungsgemäßen Verfahrens kann vorgesehen sein, dass das wenigstens eine Feldgerät anhand des generierten neuen oder geänderten Parametersatzes für den vorgegebenen Einsatzzweck automatisch konfiguriert wird. Auch bezüglich einer solchen Verwendung eines entsprechenden Parametrierungsmodells kann das wenigstens eine Feldgerät ein IO-Link-Gerät sein, welches über ein IO-Link-Kommunikationssystem kommunikationstechnisch mit einem IO-Link-Master verbunden ist.

Gemäß einem weiteren Aspekt dieses erfindungsgemäßen Verfahrens kann vorgesehen sein, dass der Benutzer mittels einer Eingabeaufforderung ("Prompt") veranlasst wird, das trainierte, transformerbasierte Parametrierungsmodell aufzufordern, maschinenlesbare Anweisungen auf der Grundlage einer von dem Benutzer, über die Computerschnittstelle, an das Parametrierungsmodell gestellten Abfrage bereitzustellen.

Gemäß einem weiteren Aspekt dieses erfindungsgemäßen Verfahrens kann vorgesehen sein, dass die Eingabeaufforderung einen oder mehrere Betriebsanweisungen umfasst, die sich auf einen oder mehrere Betriebsvorgänge des IO-Link-Gerätes gemäß dem vorgegebenen Einsatzzweck beziehen. Dabei kann zudem vorgesehen sein, dass die Betriebsanweisungen maschinenlesbare Anweisungen zur Steuerung und/oder Überwachung des Betriebs des IO-Link-Gerätes umfassen.

Die Erfindung betrifft auch ein Computerprogrammprodukt, das computerlesbare Anweisungen umfasst, die, wenn sie auf einem Computer ausgeführt werden, den Computer veranlassen, vorgenannte Verfahrensschritte auszuführen.

Das in dem Konfigurationsassistenten umgesetzte Verfahren zur bezüglich des jeweiligen Einsatzzwecks, d.h. der anwendungsbezogenen Konfiguration von IO-Link-Geräten ermöglicht es, die genannte Transferleistung genannter Parametersätze möglichst automatisiert durchzuführen. Dabei muss der Anwender/Nutzer, anhand eines intuitiv geführten Verfahrensablaufs nur noch das Wissen über die jeweilige Anwendung dem Expertensystem zur Verfügung stellen.

Im Ergebnis muss sich der Anwender/Nutzer nur noch ausschließlich mit der jeweiligen Anwendung bzw. dem jeweiligen Einsatzzweck auseinandersetzen und die entsprechenden Eingabedaten bereitstellen. Das Expertensystem stellt hierbei geführt grundlegende Fragen, die für den Anwender/Nutzer in der Regel einfach zu beantworten sind. Diese Dateneingabe (Input) wird bei dem erfindungsgemäßen Verfahren bzw. der Einrichtung automatisiert mit Expertenwissen über die Anwendung angereichert und in einen technischen Parametersatz überführt.

Im Verfahren wird der Nutzer bzw. Anwender systematisch und intuitiv durch bestimmte Dialoge geführt, in denen er sein Anwendungswissen über die technische/mechanische Situation des jeweiligen Anwendungsfalls einbringen kann. Aufgrund des hohen Automatisierungsgrades des Expertensystems muss der Anwender keine oder nur eine sehr geringe mentale Transferleistung bringen.

Der Anwender muss sich ausschließlich mit dem Konfigurationsassistenten auseinandersetzen und seinen Input bereitstellen. Dabei ist insbesondere keine Transferleistung sowie Expertenwissen seitens des Anwenders erforderlich.

Das Aufspielen eines für einen vorgegeben Einsatzzweck optimierten Parametersatzes auf ein oder mehrere hier betroffene Feldgerät(e), z.B. ein oder mehrere IO-Link-Gerät(e), kann dann in einer einzigen Routine durchgeführt werden. Durch diese Vorgehensweise wird die Effektivität und Effizienz bei der Konfiguration bzw. Parametrisierung von komplexen IO-Link Geräten erheblich reduziert.

### Kurze Beschreibung der Zeichnungen

Ausführungsbeispiele der Erfindung sind in den Zeichnungen dargestellt und werden in der nachfolgenden Beschreibung näher erläutert.
- Fig. 1: zeigt eine zu parametrisierende Sensoranordnung zur Zustandsüberwachung einer Anlagenkomponente gemäß dem Stand der Technik;
- Fig. 2: zeigt einen Auszug aus einer Parameterliste einer nachfolgend anhand von Fig. 3 beschriebenen IO-Link-basierten Sensoranordnung;
- Fig. 3: zeigt eine IO-Link-basierte Sensoranordnung zur Zustandsüberwachung einer Anlagenkomponente;
- Fig. 4: zeigt die Parametrierung einer in Fig. 3 gezeigten IO-Link-basierten Sensoranordnung mittels eines erfindungsgemäßen ein Large-Language-Model aufweisenden und auf Generativer Künstlicher Intelligenz beruhenden Konfigurationsassistenten zur Parametrierung der Sensoranordnung, und zwar anhand eines kombinierten Ablauf-/Blockdiagramms;
- Fig. 5: zeigt ein Ausführungsbeispiel eines erfindungsgemäßen, auf Generativer Künstlicher Intelligenz beruhenden Parametrierung einer IO-Link-basierten Sensoranordnung zur Zustandsüberwachung einer Anlage bzw. Anlagenkomponente;
- Fig. 6A - 6C: veranschaulichen den Aufbau einer hier betroffenen Transformer-Encoder/Decoder-Architektur zur Generierung von Parameterdaten, und zwar auf der Grundlage eines genannten transformerbasierten Parametrierungsmodells.

### Ausführungsbeispiele der Erfindung

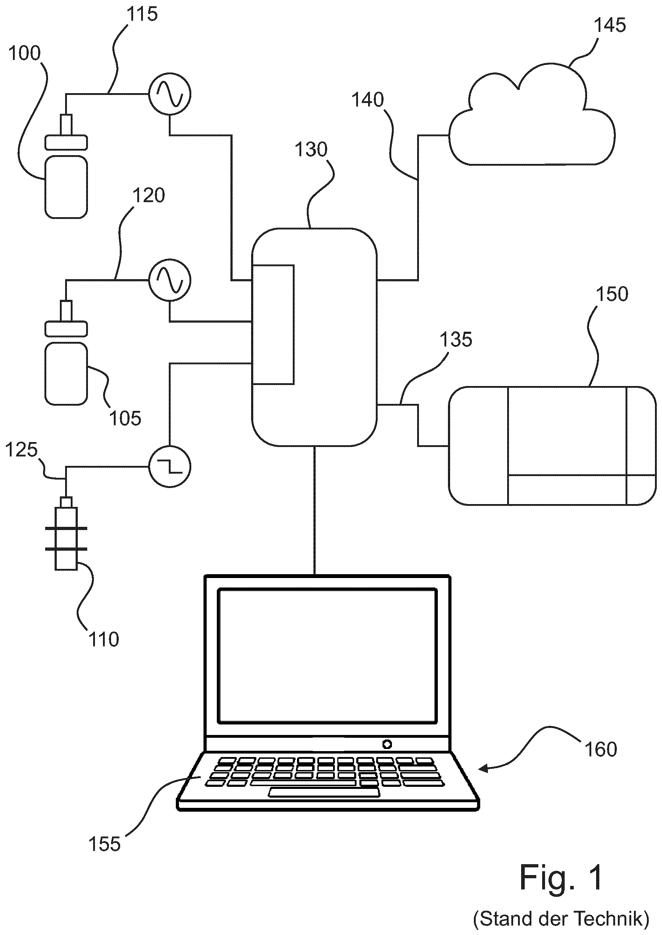

Fig. 1 zeigt eine Sensoranordnung gemäß dem Stand der Technik, als Beispiel einer Anordnung von zwei Vibrationssensoren 100, 105 und einem induktiven Geschwindigkeitssensor 110, sowie eine an sich bekannte Einrichtung zu ihrer Konfiguration bzw. Parametrierung. Die gezeigte Sensoranordnung 100 - 110 dient vorliegend zur Vibrationsüberwachung einer (hier nicht gezeigten) Anlage oder Maschine und soll beim Überschreiten einer vorgegebenen Vibrationsstärke einen Alarm auslösen.

In dem gezeigten Ausführungsbeispiel liefern die drei Sensoren 100, 105, 110 über jeweilige analoge Kommunikationsverbindungen 115, 120, 125 hochfrequente Analogsignale bzw. -werte an eine elektronische Diagnoseeinheit 130, z.B. einen Industrie-PC. Mittels der Diagnoseeinheit 130 werden die von den Sensoren 100, 105, 110 gelieferten Rohdaten 115, 120, 125 weiterverarbeitet, um das mögliche Vorliegen einer genannten Alarmsituation festzustellen. Von der Diagnoseeinheit 130 werden entsprechend aggregierte Daten via einer entsprechenden Ethernet- oder Internet-Protokoll-(IP)-basierten Kommunikationsverbindung 135, 140 an übergeordnete Systeme, in dem vorliegenden Ausführungsbeispiel an das IT-Netzwerk einer "Cloud-Computing"-Plattform 145 sowie an eine speicherprogrammierbare Steuerung (PLC) 150, übertragen.

Eine auf einem Rechner 155 eingerichtete Konfigurationssoftware 160 dient dabei zur Parametrierung der Diagnoseeinheit 130 sowie der Sensoren 100, 105, 110. Allerdings verfügen die in Fig.1 gezeigten Sensoren 100, 105, 110 in dem hier angenommenen Überwachungsszenario nicht über die Fähigkeit, solche Parametrisierungsdaten "onboard" weiterzuverarbeiten.

Über eine in dem Rechner 155 eingerichtete grafische Benutzerschnittstelle können die Parameter auf dem Rechner 155 eingelesen und/oder in den jeweiligen Sensor 100, 105, 110 geschrieben werden.

Um jedoch noch komplexere Sensoren, wie die vorgenannten, z.B. die von der Anmelderin entwickelten und vertriebenen "Condition Monitoring Sensoren" (im Folgenden kurz "CM-Sensoren") , für die jeweilige Anwendung bzw. den jeweiligen Einsatzzweck der Sensoren spezifisch zu konfigurieren, muss jedoch eine Vielzahl von Parametern nacheinander vom Anwender bzw. Benutzer manuell eingestellt werden.

So besitzt ein genannter CM-Sensor der neuesten Generation ("V2") insgesamt etwa 700 voreinstellbare Einzelparameter. Zur Parametrierung eines CM-Sensors werden an sich bekannte und standardisierte "IODD"-Dateien (d.h. maschinenlesbare Textdateien) verarbeitet, um eine Liste mit sämtlichen, für die Parametrisierung solcher IO-Link-Geräte erforderlichen bzw. vorgesehenen Parametern zu erzeugen.

Darüber hinaus gibt es häufig komplexe Abhängigkeiten zwischen einzelnen Parametern. Um eine neue Anwendung der in Fig. 1 gezeigten Sensoranordnung einzurichten, müssen daher wenigstens 20 - 30 verschiedene Parameter manuell sehr präzise eingestellt werden.

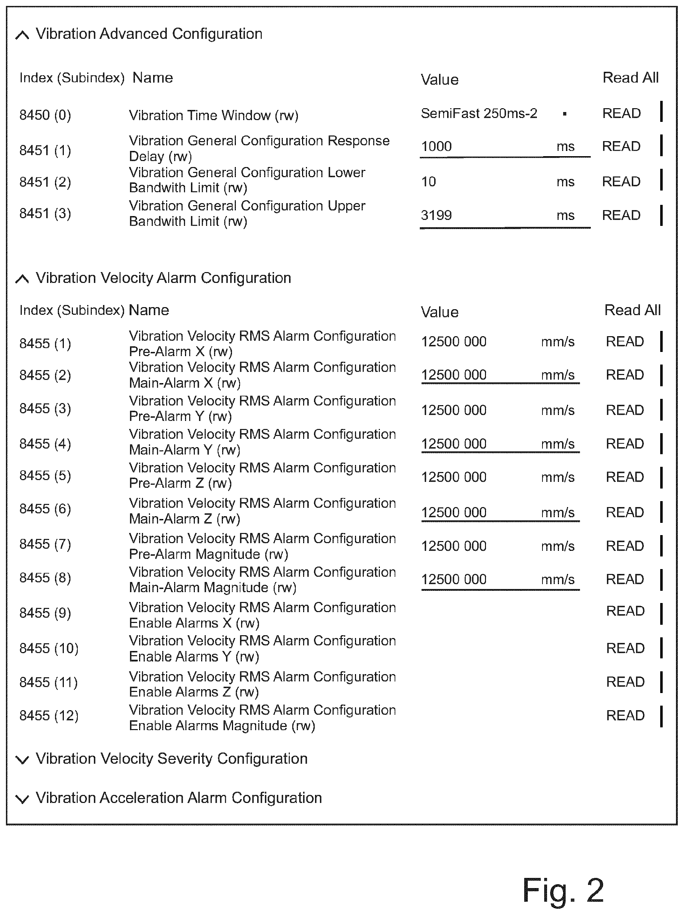

Der in Fig. 2 gezeigte Auszug aus einer genannten Parameterliste illustriert die sehr hohe Komplexität bei der Parameterkonfiguration von hier betroffenen IO-Link-Geräten am Beispiel der Parametrierung der beiden in der Fig. 1 gezeigten Vibrationssensoren 100, 105 anhand genannter "IODD"-Dateien ("IODD" = IO-Link Device Description).

Nur beispielhaft (bzw. auszugsweise) sind vorliegend einzelne Parameter für die folgenden zwei Bereiche:
1. "Vibration Advanced Configuration" und
2. "Vibration Velocity Alarm Configuration".

In dem ersten Bereich 1. geht es zum einen um die Konfiguration der für die Vibrationserkennung relevanten Zeitfenster, deren Vorgabe entsprechender Zeitwerte maßgeblich für die Erkennungsgüte von Vibrationen ist. Dabei sind geeignete Zeitwerte im Wesentlichen abhängig von dem jeweiligen Anwendungsfall, d.h. dem zu messenden Anlagenteil oder der Maschine. Denn deren Schwingungsverhalten, insbesondere die dabei möglicherweise auftretenden Schwingungsfrequenzen, sind ausschlaggebend für die Größe der jeweils einzustellenden Zeitfenster bei der Vibrationserkennung. So führt eine Voreinstellung mit zu geringem Zeitfenster dazu, dass möglicherweise erkannte Vibrationen nur unvollständig berücksichtigt werden, da kein vollständiger Phasenverlauf vorliegt. Dagegen kann ein zu groß gewähltes Zeitfenster dazu führen, dass eine Vibration, bzw. eine entsprechende Schwingung, relativ spät oder sogar zu spät erkannt wird, da zu viele vollständige Phasenverläufe ausgewertet werden müssen.

Zum anderen geht es in dem ersten Bereich 1. um die Voreinstellung von Antwortverzögerungen ("Event Response Delay"-Werten) sowie die Voreinstellung von Bandbreitewerten. Letztere dienen zur Begrenzung einer unteren und oberen Bandbreite en ("Upper" und "Lower Bandwidth Limit"-Werten). Durch an den jeweiligen Anwendungsfall entsprechend angepasste Voreinstellungen kann die Güte der Vibrationserkennung ebenfalls erheblich verbessert werden. So können z.B. die genannten Bandbreitenwerte an ein im jeweiligen Anwendungsfall zu erwartendes Schwingungsverhalten angepasst werden, um sicherzustellen, dass die vorgegebenen uns somit verfügbaren Bandbreiten der Schwingungssensoren für die Erfassung und Verarbeitung von erkannten Schwingungen, d.h. deren Schwingungsfrequenzen, ausreichend sind.

In dem zweiten Bereich 2. geht es um die Voreinstellung verschiedener Parameter, welche das Verhalten von Voralarmen und Hauptalarmen betreffen, welche bei bestimmten, vorgebbaren, erfassten Schwingungsverhalten automatisch ausgelöst werden. Dabei werden sogenannte "RMS"-Werte der Schwinggeschwindigkeit einer Vibration ("Vibration Velocity") zugrunde gelegt, wobei "RMS" einer quadratischen Mittelwertbildung ("Root Mean Square" = RMS) anhand erfasster Schwingungsdaten entspricht.

Diese das Alarmverhalten der vorliegenden Überwachungseinrichtung betreffenden Parameter müssen daher sehr präzise konfiguriert werden, um sicherzustellen, dass in einem für das jeweilige Anwendungsszenario charakteristischen Alarmfall auch tatsächlich und zuverlässig ein Alarm ausgelöst wird.

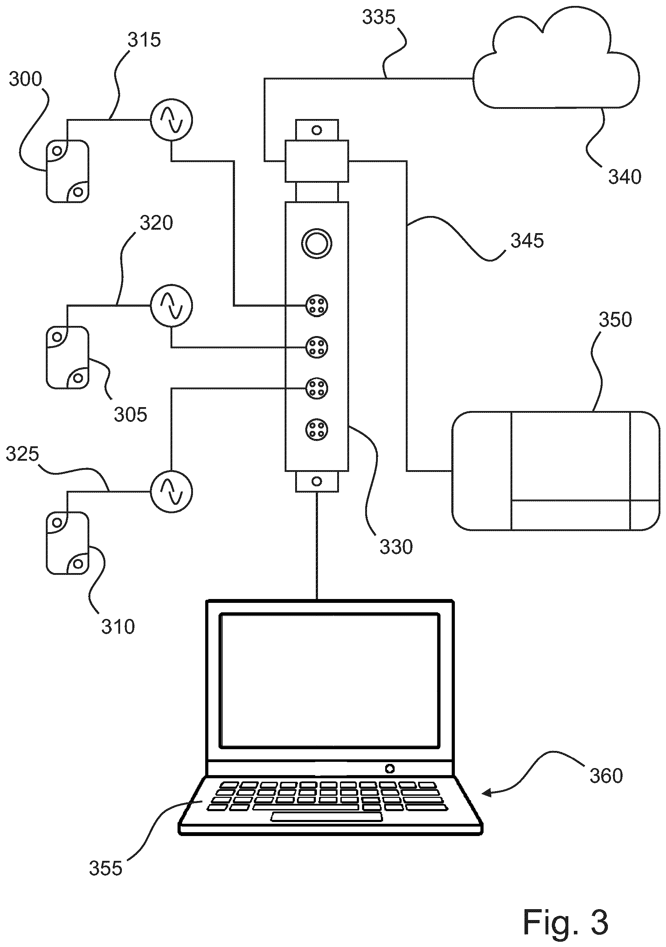

In der Fig. 3 ist eine IO-Link-basierte Sensoranordnung zur Zustandsüberwachung einer zu überwachenden Anlagenkomponente dargestellt, bei der die Parameterkonfiguration der hier beteiligten IO-Link-Geräte 300, 305, 310 gemäß der Erfindung durchführbar ist.

Ein "IO-Link" stellt eine standardisierte IO-Technologie (IEC 61131-9) dar, um mit Sensoren und auch Aktoren zu kommunizieren. Die leistungsfähige Punkt-zu-Punkt Kommunikation basiert auf dem an sich bekannten 3-Leiter Sensor und Aktor Anschlussprinzip, welches keine zusätzlichen Anforderungen an das Kabelmaterial stellt. Der "IO-Link" ist somit kein Feldbus, sondern eine Weiterentwicklung einer bestehenden und vielfach erprobten Anschlusstechnik für Sensoren und Aktoren.

Der IO-Link ist funktional und ermöglicht durch bidirektionale Kommunikation eine erweiterte Diagnose von Sensoren und Aktuatoren oder eine einfache und schnelle Parametrierung. Er ermöglicht eine schnelle Kommunikation mit den drei Kommunikationsgeschwindigkeiten 4.8k Baud, 38,4k Baud und 230,4k Baud. Er lässt sich zudem in sehr kleiner Bauweise realisieren und ermöglicht somit die Miniaturisierung "intelligenter" Sensoren und Aktuatoren.

Bei den drei in Fig. 3 gezeigten IO-Link-Geräten 300 - 310 handelt es sich jeweils um einen genannten CM-Sensor" der zweiten Generation ("V2"). Dieser weist einen M12-Steckverbinder-Anschluss auf, welcher das IO-Link-Kommunikationsprotokoll bereitstellt bzw. unterstützt und insbesondere die Fähigkeit besitzt, genannte Parametrisierungsdaten "onboard" weiterzuverarbeiten.

Die CM-Sensoren 300 - 310 sind jeweils über bidirektionale IO-Link-Verbindungen 315, 320, 325 mit einem IO-Link-Master 330 verbunden. Der IO-Link-Master 330 ist ebenfalls über eine bidirektionale IO-Link-Verbindung 335 mit einem übergeordneten IT-Netzwerk 340, z.B. einer Cloud-Computing Plattform, daten- bzw. kommunikationstechnisch verbunden. Zusätzlich ist der IO-Link-Master 330 über eine Ethernet- oder (Internet Protokoll-(IP-)basierten) Kommunikationsverbindung 345 mit einer speicherprogrammierbaren Steuerung (PLC) 350 verbunden.

In dem IT-Netzwerk 340 können die von den CM-Sensoren 300 - 310 gelieferten Sensordaten bezüglich der jeweils vorliegenden Überwachungsaufgabe (bzw. Anwendungsszenario) weiterverarbeitet und ausgewertet werden. So können die Sensordaten entweder mit empirisch vorgegebenen Schwellenwerten verglichen werden, um z.B. eine Warnmeldung herauszugeben oder anhand eines Maschinenlern-Ansatzes mittels eines künstlichen neuronalen Netzes entsprechend ausgewertet werden. Ein solches neuronales Netzwerk kann z.B. anhand von im Vorfeld generierten Sensordaten in an sich bekannter Weise trainiert werden.

Die von dem IT-Netzwerk ggf. gelieferten Warnmeldungen können dann mittels der speicherprogrammierbaren Steuerung 350 in entsprechende Steuereingriffe der jeweils überwachten (hier nicht gezeigten) Anlage oder Maschine umgewandelt werden, mittels derer ein vorliegender Alarmfall wieder aufgehoben werden kann.

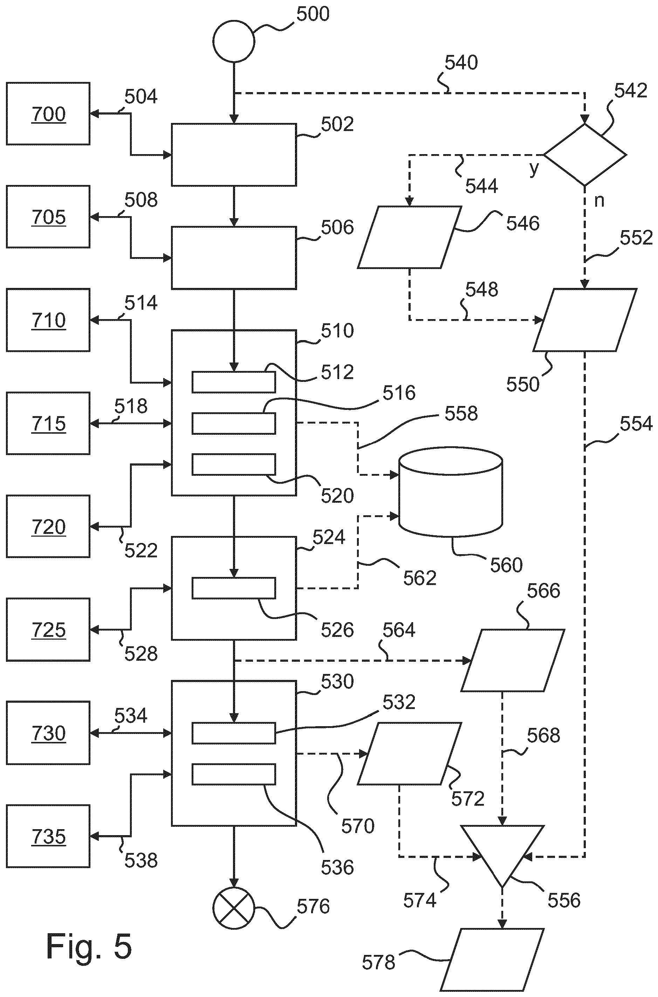

Gemäß der Erfindung ist der IO-Link-Master 330 zusätzlich mit einem Rechner 355 verbunden, auf dem insbesondere ein zur Parametrisierung der CM-Sensoren 300 - 310 dienender, auf Generativer KI beruhender Konfigurationsassistent 360 eingerichtet ist. Der Aufbau sowie die Funktionalität des Konfigurationsassistenten 360, welcher auf der Grundlage eines auf Generativer KI und einem entsprechenden Large-Language-Model beruhenden Optimierungsansatzes implementiert wird, ist in der Fig. 5 schematisch dargestellt.

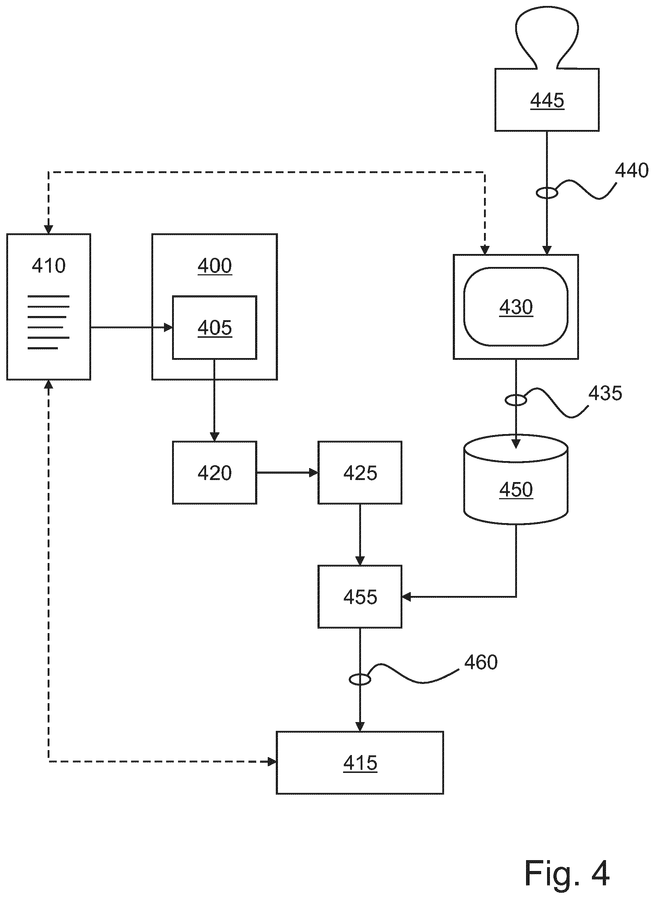

Als GenKI-Ansatz kann z.B. ein nachfolgend anhand der Fig. 4 in größerem Detail beschriebenes GenKI-System unter Anwendung eines neuronalen Netzes zur automatisierbaren bzw. GenKI-gestützten Parametrierung vorgesehen sein.

Das in Fig. 4 gezeigte Ausführungsbeispiel von Verfahrensschritten eines erfindungsgemäßen Konfigurationsassistenten 400 beruht vorliegend auf einem GenKI-basierten Optimierungs- bzw. entsprechenden Lernansatz 405, mittels dessen für ein vorgegebenes Anwendungsszenario bzw. Einsatzzweck 410 einer hierin exemplarisch beschriebenen Sensoranordnung 415 (siehe die drei CM-Schwingungssensoren 300 - 310 in Fig. 3) als Beispiel für ein hier betroffenes Feldgerät für die Parametrierung relevante Parameter 420, z.B. durch genannte Stichprobenziehung, ermittelt werden. Zudem werden für die so ermittelten Parameter 420 für das Anwendungsszenario 410 mittels einer Datenvorverarbeitung geeignete erste Trainingsfeldgerät 425 erstellt. Die CM-Schwingungssensoren 300 - 310 stellen in diesem Ausführungsbeispiel mit einem IO-Link-Kommunikationssystem verbundene IO-Link-Geräte bzw. Feldgeräte dar, können aber auch mit einem anderen (industrietauglichen) Kommunikationssystem verbunden sein.

Die auf GenKl beruhende Computerschnittstelle 430 dient insbesondere dazu, die für die automatische Konfiguration bzw. Parametrierung einer entsprechenden Sensoranordnung 415, z.B. der in Fig. 3 gezeigten drei IO-Link-Geräte 300 - 310, erforderlichen technischen Informationen bzw. Randbedingungen 435 bezüglich des vorgesehenen Einsatzzwecks zunächst datentechnisch aufzunehmen bzw. zwischenzuspeichern. Die Konfiguration bzw.

Parametrierung erfolgt insbesondere in Bezug auf das konkret vorliegende Anwendungsszenario bzw. den Einsatzzweck 410, und zwar durch über eine entsprechende Computerschnittstelle in natürlicher Sprache geführte Interaktionen 440 mit einem Anwender bzw. Benutzer 445 des Konfigurationsassistenten 400. Die Eingabe des Einsatzzwecks erfolgt über eine entsprechende Eingabeaufforderung ("Prompt") an den Benutzer, wobei die Eingabe einen oder mehrere Kontexte umfasst, welche sich auf weitere technische Informationen bezüglich des vorgegebenen Einsatzzwecks beziehen. Die Kontexte bezüglich des vorgegebenen Einsatzzwecks können datentechnisch auf der Grundlage von zugehörigen Kontext-/Metadaten verarbeitet werden.

Der Konfigurationsassistent 400 führt anhand der durch die Eingaben 440 des Benutzers bzw. Anwenders 445 erfassten Daten 435 ein Trainieren eines in einer Datenbank bzw. in einem Datenspeicher vorliegenden bzw. vorgegebenen transformerbasierten Parametrierungsmodells 450 für das jeweils vorliegende Feldgerät 415 (z.B. die vorbeschrieben CM-Sensoren 300 - 310) sowie den jeweiligen Einsatzzweck durch. Das so vorab trainierte Parametrierungsmodell 450, welches wenigstens eine nachfolgend beschriebene Transformerkomponente aufweist bzw. umfasst, wird über die Computerschnittstelle 430 dem Benutzer bzw. Anwender 445 zur Interaktion 440 bereitgestellt. Unter Verwendung von auf der Grundlage eines aktualisierten Parametersatzes erzeugten zweiten Trainingsdaten wird das vorliegende Parametrierungsmodell 450 erneut trainiert. Das so erneut trainierte transformerbasierte Parametrierungsmodell wird nun für die automatisierbare Parametrierung des vorliegenden Feldgerätes 415 und den jeweils vorliegenden Einsatzzweck über die Computerschnittstelle 430 für den jeweiligen Benutzer bzw. Anwender 445 freigegeben.

Das so trainierte Parametrierungsmodells kann nun zur Generierung eines für einen nun vorliegenden Einsatzzweck geeigneten Parametersatzes für den Betrieb eines vorliegenden Feldgerätes 415 verwendet werden. Die Verwendung erfolgt durch Interaktion eines Anwenders bzw. Benutzers 445 mittels des auf dem GenKI-System beruhenden bzw. mit diesem zusammenarbeitenden Konfigurationsassistenten 400. Der Zugriff des Benutzers 445 auf das jeweils vorliegende trainierte, transformerbasierte Parametrierungsmodell erfolgt mittels eines Computerprozessors. Über die Computerschnittstelle 430 werden eingegebene Daten zu dem vorgegebenen Einsatzzweck erfasst. Das nun vorliegende, aktuelle Parametrierungsmodell wird nun veranlasst, die eingegebenen Daten zu analysieren und Anweisungen zum Generieren eines neuen oder geänderten Parametersatzes 455, basierend auf dem aktuellen Parametrierungsmodell, bereitzustellen 460. Das Feldgerät 415 kann nun anhand des generierten neuen bzw. geänderten Parametersatzes für den vorgegebenen Einsatzzweck automatisch konfiguriert werden. Hierzu kann der mittels einer geeigneten Eingabeaufforderung dazu veranlasst werden, das Parametrierungsmodell aufzufordern, maschinenlesbare Anweisungen auf der Grundlage einer von dem Benutzer über die Computerschnittstelle an das Parametrierungsmodell gestellten Abfrage bereitzustellen. Die Eingabeaufforderung kann einen oder mehrere Betriebsanweisungen umfassen, die sich auf einen oder mehrere Betriebsvorgänge des Feldgerätes 415 entsprechend dem Einsatzzweck beziehen. Die Betriebsanweisungen können maschinenlesbare Anweisungen zur Steuerung und/oder Überwachung des Betriebs des Feldgerätes 415 umfassen.

Der Anwender bzw. Benutzer 445 muss sich vorteilhafterweise nicht mit den einzelnen technischen Parametern und deren Bedeutung auseinandersetzen, wie es beim aktuellen Stand der Technik üblich ist. Daher ist eine Konfiguration mit einzelnen Parametern, wie sie im Stand der Technik praktiziert wird, nicht erforderlich.

Bei vorgenannten CM-Sensoren 300 - 310 kann ein wie beschrieben für den betreffenden Einsatzzweck erstellter Parametersatz direkt angewendet werden, da diese Sensoren eine integrierte Parameterverwaltung aufweisen. Als Kommunikationswege für die Parametersatz-Anwendung kommen sowohl drahtgebundene Schnittstellen mit bidirektionaler Kommunikation, z. B. IO-Link oder Modbus, oder aber drahtlose Schnittstellen, z. B. Bluetooth oder Lora, in Betracht.

Durch das beschriebene Verfahren zur automatisierbaren Parametrierung eines hier betroffenen Feldgerätes 415 (z.B. eines genannten IO-Link-Gerätes) wird zudem auch die Effektivität und Effizienz bei der Konfiguration bzw. Parametrierung insbesondere von komplexen Feldgeräten erheblich reduziert.

Der genaue Konfigurationsablauf mittels eines hierin beschriebenen, auf Generativer KI beruhenden Expertensystems mit einem entsprechend vorgesehenen Konfigurationsassistenten wird nachfolgend anhand eines in Fig. 5 gezeigten Ausführungsbeispiels in größerem Detail beschrieben. Das dabei zu parametrierende IO-Link-Gerät betrifft in diesem Ausführungsbeispiel ein für den Einsatzzweck "Überwachung des Betriebszustandes einer technischen Einrichtung" vorgesehenes Überwachungsgerät.

Nach dem Start 500 des gezeigten Konfigurationsablaufs bzw. -prozesses erfolgt zunächst die Erfassung 502 des zugrundeliegenden Maschinentyps eines für die Parametrierung jeweils vorgesehenen IO-Link-Gerätes, und zwar in dem vorliegenden Beispiel eines über einen IO-Link betriebenen Überwachungsgerätes zur Überwachung des Betriebszustandes einer technischen Einrichtung. Dabei wird zudem angenommen, dass diese Einrichtung über in verschiedene räumliche Achsen sich bewegende Einrichtungsteile verfügt, z.B. die von der Anmelderin entwickelte bzw. vertriebene Sensortechnik, wie z.B. entsprechende Neigungssensoren mit mehreren Messachsen.

Die Erfassung 502 des Maschinentyps erfolgt bevorzugt durch Eingabe seitens eines Anwenders bzw. Benutzers, und zwar in dem vorliegenden Ausführungsbeispiel anhand des durch interaktive Funktionsblöcke 700 - 735 realisierten Konfigurationsassistenten. Dazu erfolgt ein bi-direktionaler Datenaustausch 504 mit dem ersten Funktionsblock 700. Als mögliche Maschinentypen stehen z.B. die Maschinenkategorien Motor, Pumpe, Ventilator und/oder Kompressor zur Verfügung.

Danach wird die jeweils zu parametrierende Überwachungsfunktion des IO-Link-Gerätes erfasst 506, und zwar ebenfalls durch Anwender-/Benutzereingabe über einen über einen bi-direktionalen Datenaustausch 508 verbundenen zweiten Funktionsblock 705. Als mögliche Überwachungsfunktionen stehen z.B. die Kategorien mechanische Schwingungen von Maschinen durch Messungen an nicht-rotierenden Teilen, z.B. von Kreiselpumpen, gemäß der ISO 10816.7-Norm, und/oder zu überwachende Temperaturwerte, und/oder zu überwachende benutzerspezifische Signalspitzenwerte und/oder zu überwachende benutzerabhängige "Root Mean Square" (RMS) Werte zur Verfügung. Dabei können quadratische Mittelwerte einer zeitlich veränderlichen physikalischen Größe, wie z.B. eines Wechselstroms oder einer Wechselspannung, zugrunde gelegt werden.

Im Anschluss daran erfolgt die Erfassung von für die Parametrierung zudem erforderlichen Eingangsdaten 510. Diese umfassen in dem vorliegenden Ausführungsbeispiel die Produktkategorie 512, die Leistungsklasse 516 sowie die Achszuordnung 520 des für die Parametrierung des betroffenen IO-Link-Gerätes.

Zur Erfassung der genannten drei Eingangsdaten 512, 516, 520 erfolgt auch hier jeweils ein bi-direktionaler Datenaustausch 514, 518, 522 mit den entsprechenden Funktionsblöcken 710, 715, 720. So werden in dem vorliegenden Ausführungsbeispiel in dem dritten Funktionsblock 710 Pumpenkategorien wie z.B. "Pumpenkategorie I" und "Pumpenkategorie II" zur Verfügung gestellt. In dem vierten Funktionsblock 715 werden hingegen elektrische Leistungsklassen, insbesondere auf der Grundlage der jeweiligen Anzahl an Rotorblättern, z.B. eine Leistung von 1 - 200 kW bei > 3 Rotorblättern, eine Leistung von 201 - 1000 kW bei >= 3 Rotorblättern und/oder eine Leistung von > 100 kW unabhängig von der Anzahl der Rotorblätter, zur Verfügung gestellt. Schließlich werden in dem fünften Funktionsblock 720 eine oder zwei senkrecht zur Antriebswelle eines elektrischen Antriebs einer solchen Pumpe angeordnete Achsen zur Verfügung gestellt bzw. können selektiert werden.

Danach erfolgt in dem gezeigten Ausführungsbeispiel die Erfassung von Daten bezüglich der an dem über einen IO-Link angeschlossenen Überwachungsgerät vorzusehenden Alarm-Einstellungen 524, insbesondere entsprechender auf zugrunde liegenden Sensordaten beruhender Alarmwerte 526 des IO-Link-Gerätes. So kann mittels sogenannter "Smart Sensor"-Technologie ein Alarm ausgelöst werden, wenn Feuchtigkeit in das jeweilige Gerät eindringt. Dadurch kann z.B. angezeigt werden, dass sich das Gerät in einer extremen Umgebungssituation befindet. Dabei müssen jedenfalls die entsprechenden Alarmstufen parametriert werden.

Zur Erfassung der genannten Alarmwerte 526 erfolgt auch hier jeweils ein bi-direktionaler Datenaustausch 528 mit dem betroffenen sechsten Funktionsblock 725. Dabei werden in diesem Funktionsblock 725 verschiedene Risikokategorien gemäß einem Gefährdungsgrad vorgegeben. Diese können z.B. auf einer Risikoanalyse beruhen, mittels der sämtliche mit einer jeweiligen Maschine verbundene Gefahren ermittelt werden können. Eine solche Risikobeurteilung beruht auf einer Folge von logischen Schritten z.B. gemäß der DIN EN ISO 14121, welche die systematische Untersuchung von Gefährdungspotentialen ermöglichen, die von den jeweiligen Maschinen ausgehen."

In dem vorliegenden Ausführungsbeispiel werden schließlich für die Datenübertragung 530, z.B. zur drahtlosen Datenübertragung, erforderliche Daten bzw. Werte erfasst. In dem vorliegenden Beispiel betreffen diese Daten Steuerparameter zur digitalen Datenübertragung, z.B. das jeweils anzuwendende Datenübertragungsprotokoll sowie die geeignete Übertragungsrate 532 sowie die Bezeichnung der bei der Datenübertragung zugrunde liegenden Anwendung 536.

Zur Erfassung der genannten beiden Eingangsdaten 532, 536 erfolgt auch hier jeweils ein bi-direktionaler Datenaustausch 534, 538 mit den entsprechenden Funktionsblöcken 730, 735. So werden in dem siebten Funktionsblock 730, basierend auf der nunmehr vorliegenden Konfiguration des über einen IO-Link betriebenen Überwachungsgerätes zur Überwachung des Betriebszustandes einer technischen Einrichtung, automatisch die folgenden Daten übertragen:
- Prozesswerte, z.B. Schwingungsamplituden und/oder Schwingungsgeschwindigkeiten (wiederum ggf. als entsprechende RMS-Werte);
- Zustandsbits, z.B. entsprechende Bits für die Alarmbereiche "Voralarm", "Hauptalarm" und/oder "Gefährdungszonen".

Schließlich wird in dem achten Funktionsblock 735 die genaue Bezeichnung des jeweiligen Anwendungsfalls bzw. Einsatzzwecks benutzerseitig erfasst. Ein Bespiel dafür kann z.B. "Erste Überwachungsfunktion" sein.

Auf der Grundlage sämtlicher für die Parametrierung des jeweils vorliegenden IO-Link-Gerätes nunmehr erfassten Konfigurationsdaten erfolgt nun die auf der rechten Seite durch gestrichelte Linien angedeutete Verarbeitung dieser Daten zum Zweck der automatisierten Erstellung der finalen IO-Link Parameter. Dabei wird über eine Datenleitung 540 zunächst geprüft 542, ob die jeweils betroffene Überwachungsfunktion des jeweiligen IO-Link-Gerätes zum ersten Mal parametrisiert werden soll. Ist dies der Fall, dann werden über eine Datenleitung 544 im Vorfeld festgelegte, initiale IO-Link-Parameter abgerufen 546. Im nächsten, über weitere Datenleitungen 548, 552 verbundenen Verarbeitungsschritt 550 werden entsprechende, für die weitere Verarbeitung geeignete IO-Link-Parameterdaten erzeugt.

Parallel zu den genannten Verarbeitungsschritten 542 - 550 werden die erfassten Eingangsdaten 510, 524, d.h. die genannten Daten 512, 516, 520, sowie die Alarm-bezogenen Daten 526 einer Datenbank 560 zugeführt 558. In dieser wissensbasierten Datenbank sind für diese anwendungsbezogenen Daten mögliche Anwendungen des IO-Link-Gerätes, z.B. die hier betroffene Überwachungsanwendung, in dem vorliegenden Ausführungsbeispiel regelbasiert hinterlegt.

Auf der Grundlage der zu den aktuell vorliegenden Daten 512, 516, 520, 526, entsprechenden Regeln werden über eine Datenleitung 564 entsprechende IO-Link-Parameterdaten erzeugt 566. Zusätzlich werden in dem vorliegenden Ausführungsbeispiel die genannten Datenübertragungsdaten 532, 536 über eine Datenleitung 570 ebenfalls in entsprechende IO-Link-Parameterdaten umgewandelt 572.

Die somit insgesamt vorliegenden IO-Link-Parameterdaten werden schließlich über Datenleitungen 554, 568 und 574 miteinander vereinigt bzw. zusammengeführt 556, und zwar als Eingangsdaten eines im Vorfeld mit entsprechenden Daten antrainierten Parametrierungsmodells eines GenKl-Systems bzw. einem diesem System zugrunde liegenden künstlichen neuronalen Netzwerks. Das GenKI-System liefert dann automatisiert im Ergebnis die für den vorliegenden Anwendungsfall bzw. Einsatzzweck (hier Überwachungsanwendung) des IO-Link-Gerätes geeigneten IO-Link-Parameterdaten.

Es ist anzumerken, dass die hier gezeigten Reihenfolgen des Ablaufs 502 - 536 der gesamten Konfiguration bzw. der entsprechenden Funktionsblöcke 700 - 735 nur beispielhaft ist und ggf. abgewandelt werden kann.

Die abschießende Erzeugung 578 der gesamten IO-Link-Parameter auf der Grundlage der wie beschrieben erfassten Daten erfolgt somit auf der Grundlage des beschriebenen GenKI-Ansatzes, wobei auf der Grundlage von seitens des Anwenders bzw. Benutzers geführt eingegebenen Daten für den jeweiligen Anwendungsfall bzw. Einsatzzweck - ein für den Anwendungsfall bzw. Einsatzzweck geeigneter Parametersatz ermittelt wird und wobei insbesondere auch Korrelationen zwischen den dabei zugrunde gelegten Parametern Berücksichtigung finden.

Die gesamte Prozessablauf 502 - 578 endet 576 schließlich mit dem Vorliegen des genannten Parametrisierungsergebnisses 578.

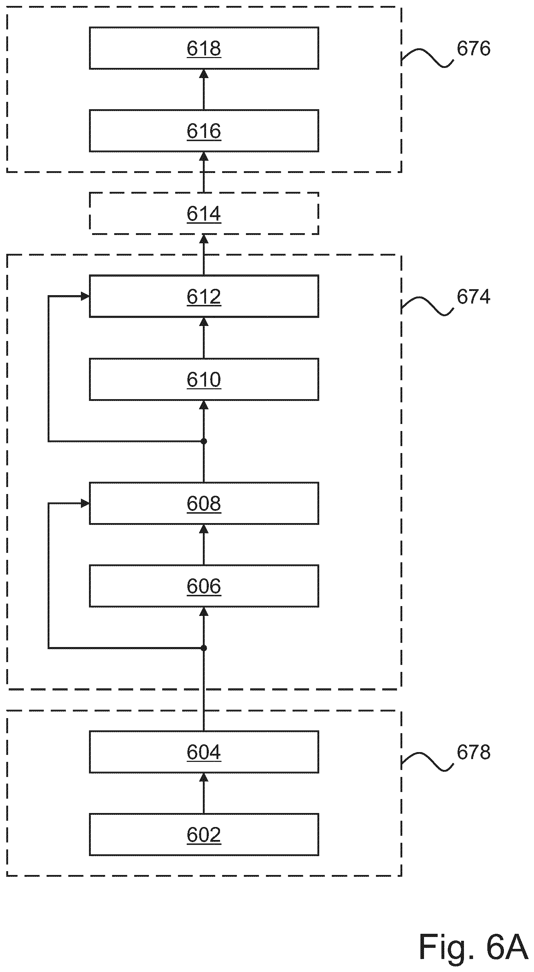

Die Figuren 6A - 6C veranschaulichen den an sich bekannten Aufbau einer hier betroffenen Transformer-Encoder/Decoder-Architektur zur Generierung von Parameterdaten auf der Grundlage eines genannten transformerbasierten Parametrierungsmodells.

Fig. 6A veranschaulicht eine Ausführungsform einer Transformer-Encoder-Architektur. Der Transformer-Encoder umfasst einen Encoder-Eingang ("encoder input") 678, einen oder mehrere Encoder-Blöcke 674, 614 sowie einen Encoder-Ausgang ("encoder output") 676. Der Encoder-Ausgang 676 umfasst in dem Ausführungsbeispiel zwei Verarbeitungsebenen, nämlich eine lineare Schicht 616 sowie eine sogenannte "softmax"-Schicht 618. Eine solche lineare Schicht dient bekanntermaßen dazu, jedes Eingabeneuron mit jedem Ausgabeneuron des neuronalen Netzwerks zu verbinden. Eine solche "softmax"-Schicht wird bekanntermaßen häufig in der letzten Schicht eines neuronalen Netzwerkmodells für Klassifizierungsaufgaben verwendet und wandelt rohe Ausgabewerte (sog. "Logits") in Wahrscheinlichkeiten um, indem sie die Exponentialfunktion jeder Ausgabe bildet und diese Werte durch Division durch die Summe aller Werte normalisiert. Dadurch lässt sich ein Vektor von K realen Werten in einen Vektor von K realen Werten umwandeln, deren Summe 1 ergibt. Die Eingabewerte können positiv, negativ, null oder größer als eins sein, wobei die "Softmax"-Funktion diese in Werte dazwischen um 0 und 1 umwandelt, so dass diese Werte als Wahrscheinlichkeitswerte interpretiert werden können.

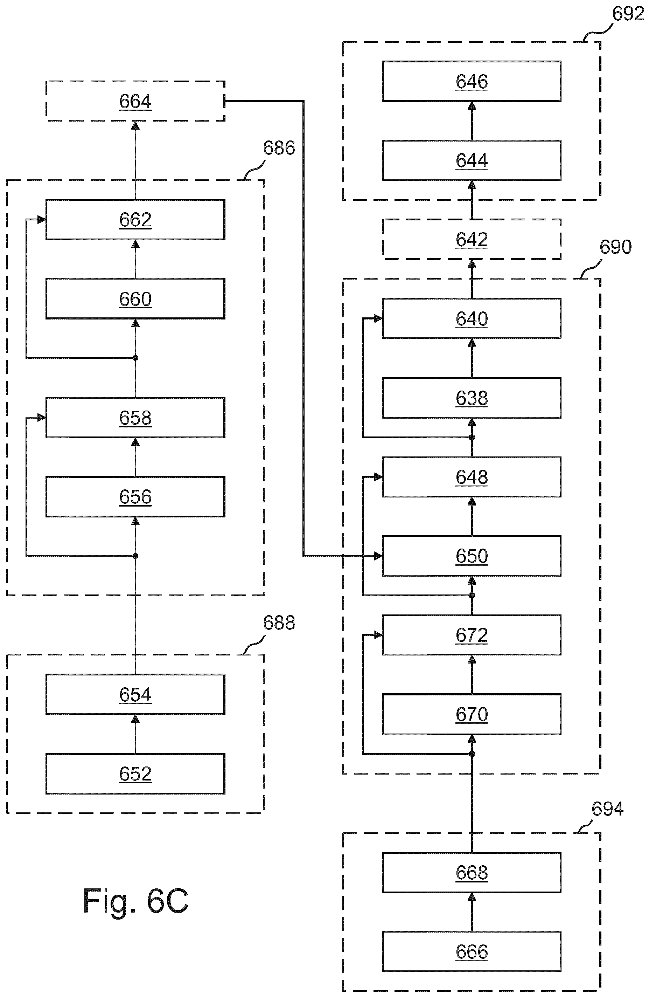

Die hier gezeigte Transformer-Encoder-Architektur kann von der im Stand der Technik bekannten Transformer-Encoder-Decoder-Architektur (siehe Fig. 6C) abgeleitet werden. Die gezeigte Transformer-Encoder-Architektur kann einen zusätzlichen Encoder-Ausgang aufweisen, um den Encoder-Block, wie in Fig. 6C gezeigt, direkt mit dem Decoder einer Transformer-Encoder-Decoder-Architektur zu verbinden.

Die Eingangs- bzw. Eingabedaten ("input data") werden am Encoder-Eingang 678 empfangen, welcher eine sogenannte "Einbettung" 602 der Eingabedaten anwenden kann. Das Anwenden der Eingabeeinbettung 602 kann sich auf das Weiterleiten der Eingabedaten durch eine Einbettungsschicht beziehen. Darüber hinaus kann der Encoder-Eingang 678 eine Positionskodierung 604 anwenden. Das Anwenden der Positionskodierung 604 kann sich auf das Hinzufügen eines Positionsfaktors zu den eingebetteten Eingabedaten beziehen. Vorzugsweise können die Eingabedaten eine Abfolge von Elementen spezifizieren, wobei der Positionsfaktor einen Hinweis auf die Position der Elemente innerhalb der Abfolge bzw. Sequenz geben kann.

Die eingebetteten Eingabedaten können von einem der gezeigten Encoder-Blöcke 674, 614 (optionaler Block) verarbeitet werden. Die eingebetteten Eingabedaten können einer für die jeweiligen Ebenen bzw. Schichten der zugrunde liegenden Softwarearchitektur durchgeführten Normalisierung 608 (im folgenden "Schichtnormalisierung") über eine besondere Datenverbindung bereitgestellt werden. Solche Ebenen/Schichten betreffen z.B. die Anwendungsebene (bzw. Benutzerschnittstelle), die Ebene des "Large-Language-Models" sowie eine für das Trainieren vorliegend eines Parametrierungsmodells vorgesehene Datenebene.

Für die so eingebetteten Eingabedaten kann ein sogenannter "multi-head self attention"-Mechanismus 606 durchgeführt werden, der es einem zugrundeliegenden Modell ermöglicht, sich auf verschiedene Teile der Eingabedaten zu konzentrieren, ähnlich wie Menschen beim Verstehen eines Satzes auf bestimmte Wörter achten. Durch diesen Mechanismus kann das Modell entscheiden, welche Teile der Eingabe für eine bestimmte Aufgabe relevant sind, wodurch es äußerst flexibel und leistungsstark wird. Ein solcher Prozessschritt an Transformern wird somit dazu verwendet, um die Ausdruckskraft und die Modellierungsmöglichkeiten des dem KI-System zugrundeliegenden Neuronalen Netzwerks zu verbessern. Dadurch können Transformer verschiedene Arten von Abhängigkeiten und Beziehungen zwischen Wörtern oder Elementen in einer Abfolge bzw. Sequenz der Eingabedaten erfassen. Ein solcher Prozessschritt kann auch als ein Filter verstanden werden, der auf die eingebetteten Eingabedaten angewendet wird. Durch Anwenden des Filters auf die eingebetteten Eingabedaten können die mit den eingebetteten Eingabedaten verbundenen Elemente, die zu den zu generierenden Ausgabedaten beitragen, für die Generierung der Ausgabedaten identifiziert werden. Daher kann der Filter den Grad des Beitrags der mit den eingebetteten Eingabedaten verbundenen Elemente zu den zu generierenden Ausgabedaten darstellen.

Für die eingebetteten Eingabedaten kann, zusätzlich zur "multi-head self attention" 606, eine sogenannte "feed-forward"-Schicht 610 sowie eine entsprechende Schichtnormalisierung 612 vorgesehen sein. Mittels solcher "feed-forward"-Schichten wird in an sich bekannter Weise ein vorwärts gerichtetes neuronales Netzwerk gebildet, welches aus einer Eingabeebene, einer oder mehreren verborgenen Ebenen und einer Ausgabeebene besteht. Die Daten fließen somit nur in einer Richtung, und zwar von der Eingabeschicht über die verborgenen Schichten bis zur Ausgabeschicht.

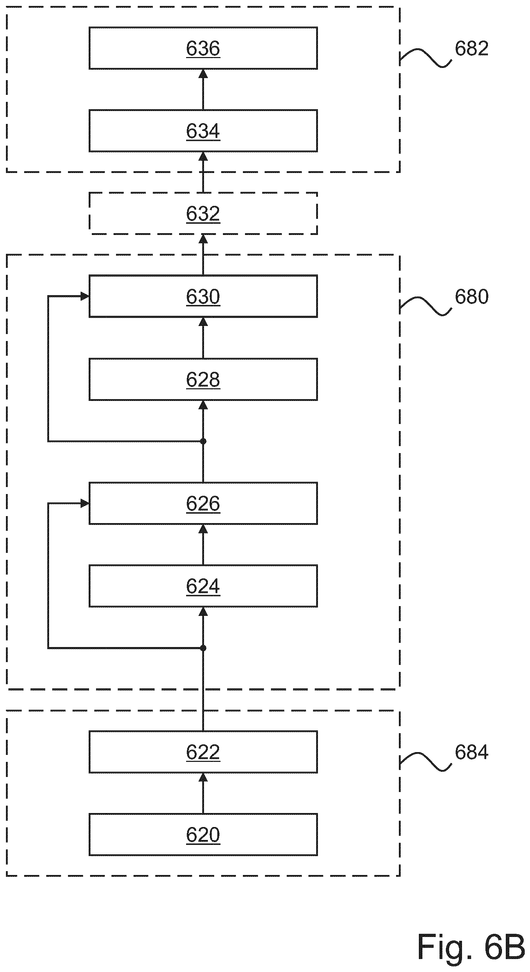

Fig. 6B veranschaulicht eine Ausführungsform einer Transformer-Decoder-Architektur. Der Transformer-Decoder umfasst einen Decoder-Eingang 684, einen oder mehrere Decoder-Blöcke 680, 632 sowie einen Decoder-Ausgang 692. Die vorliegende Transformer-Decoder-Architektur kann von der im Stand der Technik bekannten und in Fig. 6C gezeigten Transformer-Encoder-Decoder-Architektur abgeleitet werden. Die Transformer-Decoder-Architektur kann derjenigen Decoder-Architektur entsprechen, die der Transformer-Encoder-Decoder-Architektur zugeordnet ist, und zwar unabhängig vom Erhalt eines oder mehrerer verborgener Zustände ("hidden states") von dem Encoder des Transformer-Encoder-Decoders. Im Stand der Technik sind eine Vielzahl von solchen Transformer-Decoder-Architekturen verfügbar, beispielsweise die an sich bekannten generalisierten und bereits trainierten "GPT"-Transformer.

Der Decoder-Eingang 684 kann die hier vorliegende Einbettung 620 der Eingabedaten und die Positionskodierung 622 analog zur Eingabeeinbettung 602 und der Positionskodierung 204 anwenden, wie im entsprechenden Kontext von Fig. 6A beschrieben. Der Decoder-Block 680 kann die entsprechenden Schichtnormalisierungen 626, eine maskierte "multi-head self attention" 624, eine sogenannte "feed-forward"-Schicht 628 sowie eine entsprechende Schichtnormalisierung 630 umfassen, welche über eine besondere Datenverbindung der jeweiligen Schichtnormalisierung 626 bereitgestellt werden.

Darüber hinaus kann die maskierte "multi-head self attention" 624 auf die eingebetteten Eingabedaten angewendet werden, wobei die maskierte "multi-head self attention" 624 im Wesentlichen derjenigen im Kontext von Fig. 6A entspricht. Allerdings enthält sie eine zusätzliche Maskierung eines Teils der eingebetteten Eingabedaten, die mit Elementen verknüpft sind, die später in der Sequenz als das zu erzeugende Element liegen. Zusätzlich oder alternativ kann der Teil der Eingabedaten, der mit Elementen verknüpft ist, die später in der Sequenz als das zu generierende Element liegen, möglicherweise nicht erhalten bzw. empfangen und/oder nicht in die eingebetteten Eingabedaten umgewandelt werden. Daher kann der Transformer-Encoder für Klassifizierungsaufgaben konfiguriert werden, der Transformer-Decoder allerdings nur für die Textgenerierung.

Fig. 6C veranschaulicht das Zusammenspiel bzw. das Zusammenwirken zwischen einem beschriebenen Transformer-Encoder und einem Transformer-Decoder.

Der Transformer-Encoder-Decoder kann den Encoder-Eingang 688, den einen oder die mehreren Encoder-Blöcke 686, 664, den Decoder-Eingang 694, den Decoder-Block 690 und den Decoder-Ausgang 692 umfassen. Der Encoder-Eingang 688 kann dem Encoder-Eingang 278 von Fig. 6A entsprechen. Der eine oder die mehreren Encoder-Blöcke 686, 664 können dem einen oder den mehreren Encoder-Blöcken 674, 614 aus Fig. 6A entsprechen. Der Decoder-Eingang 294 kann dem Decoder-Eingang 684 von Fig. 6B entsprechen. Der Decoder-Block 690 kann eine maskierte "multi-head self attention" 670, eine Schichtnormalisierung 672, eine bereits genannte "feed-forward"-Schicht 638 und eine Schichtnormalisierung 640 aufweisen. Diese können analog zur maskierten "multi-head self attention" 624, der Schichtnormalisierung 626, 630 und der "feed-forward"-Schicht 628, wie im Kontext von Fig. 6B beschrieben, ausgebildet sein. Der Decoder-Block 690 kann weiterhin eine "multi-head self attention" 650 und eine Schichtnormalisierung 648 umfassen.

Analog zur Beschreibung von Fig. 6B, kann der Kontexttensor aus der maskierten "multi-head self attention" 670 und der Schichtnormalisierung 672 erhalten werden. Die Schichtnormalisierung 648 kann auf den Kontextvektor angewendet werden, der aus der "multi-head self attention" 650 und den verborgenen Zuständen ("hidden states") des einen oder der mehreren Encoder-Blöcke 686, 664 erhalten wird. Der aus der Schichtnormalisierung 648 resultierende Kontextvektor kann, analog zur Beschreibung von Fig. 6B, über eine "feed-forward"-Ebene bzw. -Schicht 638 mittels einer genannten Schichtnormalisierung 640 verarbeitet werden. Der aus der Schichtnormalisierung 640 resultierende Kontextvektor kann, analog zum Decoder-Block 690, an weitere Decoder-Blöcke 642 bereitgestellt werden. Der aus dem einen oder den mehreren Decoder-Blöcken 690, 642 erhaltene Kontextvektor kann dem Decoder-Ausgang 692 bereitgestellt werden. Der Decoder-Ausgang 292 kann dem Decoder-Ausgang 682 von Fig. 6B entsprechen.

Mit der beschriebenen Architektur kann der Transformer-Encoder-Decoder Eingabedaten am Encoder-Eingang 688 und dem einen oder mehreren Encoder-Blöcken 686, 664 sowie dem Decoder-Block 690 und dem Decoder-Ausgang 692 erhalten bzw. empfangen und wie beschrieben verarbeiten. Basierend auf den Eingabedaten, kann der Transformer-Encoder-Decoder Ausgabedaten ("output data") sequentiell erzeugen. Die so sequentiell erzeugten Ausgangsdaten können dem Decoder-Eingang 694, dem einen oder den mehreren Decoder-Blöcken 690, 642 und dem Decoder-Ausgang 692 bereitgestellt und/oder von diesen verarbeitet werden. Vorzugsweise kann eine Sequenz dem Encoder-Eingang 688 bereitgestellt werden. Nachdem er wenigstens einen Teil der Ausgangsdaten erzeugt hat, kann der Decoder-Eingang 694 mit wenigstens einem Teil der Elemente der bereits erzeugten Ausgangsdaten wiederum versorgt werden. Dadurch können die nächsten Elemente der Ausgabedaten mit höherer Genauigkeit generiert werden, indem sowohl die Eingabedaten als auch die generierten Ausgabedaten berücksichtigt werden.

## Patentansprüche

1. Computerimplementiertes Verfahren zur automatisierbaren Parametrierung wenigstens eines über eine digitale Schnittstelle mit einem Kommunikationsnetzwerk (315 - 325) verbundenen Feldgerätes (300 - 310, 415) für einen vorgegebenen Einsatzzweck des wenigstens einen Feldgerätes, **dadurch gekennzeichnet, dass** das Verfahren mittels eines ein Large-Language-Model aufweisenden und auf Generativer Künstlicher Intelligenz beruhenden Konfigurationsassistenten (360, 400) erfolgt, wobei das Verfahren folgende Schritte umfasst:
- Trainieren eines transformerbasierten Parametrierungsmodells (450) anhand von betriebsrelevanten und/oder produktrelevanten Daten (425) des wenigstens einen Feldgerätes oder Optimieren eines vorhandenen transformerbasierten Parametrierungsmodells anhand solcher Daten;
- Bereitstellen, über eine Computerschnittstelle (430), des trainierten oder optimierten transformerbasierten Parametrierungsmodells, welches mindestens eine Transformerkomponente umfasst;
- Kommunizieren (440) eines Benutzers mit dem Konfigurationsassistenten (400) in natürlicher Sprache, über die Computerschnittstelle (430), zur Erfassung von Daten (435) bezüglich des vorgegebenen Einsatzzwecks des wenigstens einen Feldgerätes;
- Veranlassen (445) des trainierten, transformerbasierten Parametrierungsmodells (450), unter Verwendung der erfassten Daten für den vorgegebenen Einsatzzweck, optimierte Parametrierungsdaten (455) auszugeben;
- Freigeben (445) der von dem trainierten, transformerbasierten Parametrierungsmodell (450) ausgegebenen, optimierten Parametrierungsdaten (455) für die automatisierbare Parametrierung des wenigstens einen Feldgerätes (300 - 310, 415).

2. Verfahren nach Anspruch 1, wobei das wenigstens eine Feldgerät (300 - 310, 415) ein IO-Link-Gerät ist, welches über ein IO-Link-Kommunikationssystem (315 - 325) kommunikationstechnisch mit einem IO-Link-Master verbunden ist.

3. Verfahren nach Anspruch 1 oder 2, **dadurch gekennzeichnet, dass** das Trainieren des Parametrierungsmodells (450) unter Verwendung einer Deep-Learning- und/oder Reinforcement-Learning-Technologie erfolgt.

4. Verfahren nach Anspruch 3, **dadurch gekennzeichnet, dass** das Erzeugen eines trainierten Parametrierungsmodells (450) zusätzlich durch Stichprobenziehung aus einer erlernten Wahrscheinlichkeitsverteilung von Parameterwerten erfolgt.

5. Verfahren nach einem der vorhergehenden Ansprüche, **dadurch gekennzeichnet, dass** rohe, auf einem vorgegebenen Parametersatz basierende Daten von einer Vorverarbeitungseinrichtung vorverarbeitet werden, um die auf dem Parametersatz basierenden Trainingsdaten bereitzustellen.

6. Verfahren nach einem der vorhergehenden Ansprüche, **dadurch gekennzeichnet, dass** eine Eingabeaufforderung an den Benutzer einen oder mehrere Kontexte umfasst, welche sich auf weitere Informationen bezüglich des vorgegebenen Einsatzzwecks beziehen.

7. Verfahren nach einem der vorhergehenden Ansprüche, **dadurch gekennzeichnet, dass** das Verfahren das Aktualisieren der auf dem Parametersatz basierenden Trainingsdaten und das Veranlassen des trainierten, transformerbasierten Parametrierungsmodells zum erneuten Trainieren, auf der Grundlage eines aktualisierten Parametersatzes, umfasst.

8. Verfahren nach Anspruch 7, **dadurch gekennzeichnet, dass** das erneute Trainieren eines bereits trainierten, transformerbasierten Parametrierungsmodells entweder ein geplantes erneutes Training, ein kontinuierliches erneutes Training, oder ein auslöserbasiertes erneutes Training ist.

9. Verfahren nach Anspruch 8, **dadurch gekennzeichnet, dass** der Auslöser für ein auslöserbasiertes erneutes Training auf einem Schwellenwert und einer Bewertung basiert, welche sich auf Konfigurations- oder Parametrierungsanweisungen beziehen, die von dem trainierten, transformerbasierten Parametrierungsmodell bereitgestellt werden.

10. Computerimplementiertes Verfahren zur Verwendung eines gemäß einem der vorhergehenden Ansprüche trainierten, transformerbasierten Parametrierungsmodells (450) zur Generierung eines für einen vorgegebenen Einsatzzweck geeigneten Parametersatzes (455) für den Betrieb wenigstens eines über eine digitale Schnittstelle eines Kommunikationsnetzwerks (315 - 325) kommunikationstechnisch verbundenen Feldgerätes (300 - 310, 415), wobei das Verfahren folgende Schritte umfasst:
- Bereitstellen des Zugriffs eines Benutzers (445) auf ein trainiertes, transformerbasiertes Parametrierungsmodells (450) mittels eines Computerprozessors;
- Empfangen, über eine Computerschnittstelle (430), eingegebener Daten (435) zu dem vorgegebenen Einsatzzweck;
- Veranlassen des trainierten, transformerbasierten Parametrierungsmodells (450), die eingegebenen Daten zu analysieren und Anweisungen zum Generieren eines neuen oder geänderten Parametersatzes (455), basierend auf dem trainierten Parametrierungsmodell (450) bereitzustellen.

11. Verfahren nach Anspruch 10, wobei das wenigstens eine Feldgerät ein IO-Link-Gerät ist, welches über ein IO-Link-Kommunikationssystem kommunikationstechnisch mit einem IO-Link-Master verbunden ist.

12. Verfahren nach Anspruch 11, **dadurch gekennzeichnet, dass** das wenigstens eine Feldgerät anhand des generierten neuen oder geänderten Parametersatzes für den vorgegebenen Einsatzzweck automatisch konfiguriert wird.

13. Verfahren nach Anspruch 11 oder 12, **dadurch gekennzeichnet, dass** der Benutzer mittels einer Eingabeaufforderung veranlasst wird, das trainierte, transformerbasierte Parametrierungsmodell aufzufordern, maschinenlesbare Anweisungen auf der Grundlage einer von dem Benutzer, über die Computerschnittstelle, an das Parametrierungsmodell gestellten Abfrage bereitzustellen.

14. Verfahren nach Anspruch 13, **dadurch gekennzeichnet, dass** die Eingabeaufforderung einen oder mehrere Betriebsanweisungen umfasst, die sich auf einen oder mehrere Betriebsvorgänge des IO-Link-Gerätes gemäß dem vorgegebenen Einsatzzweck beziehen.

15. Verfahren nach Anspruch 14, **dadurch gekennzeichnet, dass** die Betriebsanweisungen maschinenlesbare Anweisungen zur Steuerung und/oder Überwachung des Betriebs des IO-Link-Gerätes umfassen.

16. Computerprogrammprodukt, das computerlesbare Anweisungen umfasst, die, wenn sie auf einem Computer ausgeführt werden, den Computer veranlassen, die Schritte nach einem der Ansprüche 1 bis 15 auszuführen.

## Claims

1. Computer-implemented method for the automatable parameterisation of at least one field device (300 - 310, 415) connected via a digital interface to a communication network (315 - 325) for a predetermined purpose of use of the at least one field device, **characterised in that** the method is carried out by means of a configuration assistant (360, 400) having a large-language model and based on generative artificial intelligence, wherein the method comprises the following steps:
- training a transformer-based parameterisation model (450) on the basis of operationally relevant and/or product-relevant data (425) of the at least one field device or optimising an existing transformer-based parameterisation model on the basis of such data;
- providing, via a computer interface (430), the trained or optimised transformer-based parameterisation model comprising at least one transformer component;
- a user communicating (440) with the configuration assistant (400) in natural language, via the computer interface (430), for collecting data (435) relating to the predetermined intended use of the at least one field device;
- causing (445) the trained, transformer-based parameterisation model (450), using the data collected for the predetermined intended use, to output optimised parameterisation data (455);
- releasing (445) the optimised parameterisation data (455) output by the trained, transformer-based parameterisation model (450) for the automatable parameterisation of the at least one field device (300 - 310, 415).

2. Method according to claim 1, wherein the at least one field device (300 - 310, 415) is an IO-link device that is communicatively connected to an IO-link master via an IO-link communication system (315-325).

3. Method according to claim 1 or 2, **characterised in that** the parameterisation model (450) is trained using a deep learning and/or reinforcement learning technology.

4. Method according to claim 3, **characterised in that** a trained parameterisation model (450) is additionally generated by sampling from a learned probability distribution of parameter values.

5. Method according to one of the preceding claims, **characterised in that** raw data based on a predetermined parameter set is pre-processed by a pre-processing device in order to provide the training data based on the parameter set.

6. Method according to one of the preceding claims, **characterised in that** a prompt to the user comprises one or more contexts which relate to further information relating to the predetermined intended use.

7. Method according to one of the preceding claims, **characterised in that** the method comprises updating the training data based on the parameter set and causing the trained, transformer-based parameterisation model to be retrained on the basis of an updated parameter set.

8. Method according to claim 7, **characterised in that** the retraining of an already trained, transformer-based parameterisation model is either a planned retraining, a continuous retraining, or a trigger-based retraining.

9. Method according to claim 8, **characterised in that** the trigger for a trigger-based retraining is based on a threshold and a score related to configuration or parameterisation instructions provided by the trained, transformer-based parameterisation model.

10. Computer-implemented method for using a transformer-based parameterisation model (450) trained according to one of the preceding claims to generate a parameter set (455) suitable for a predetermined intended use for the operation of at least one field device (300 - 310, 415) communicatively connected via a digital interface of a communication network (315 - 325), wherein the method comprises the following steps:
- providing a user (445) with access to a trained, transformer-based parameterisation model (450) by means of a computer processor;
- receiving, via a computer interface (430), input data (435) relating to the predetermined intended use;
- causing the trained, transformer-based parameterisation model (450) to analyse the input data and provide instructions for generating a new or changed parameter set (455) based on the trained parameterisation model (450).

11. Method according to claim 10, wherein the at least one field device comprises an IO-link device, which is communicatively connected to an IO-link master via an IO-link communication system.

12. Method according to claim 11, **characterised in that** the at least one field device is automatically configured for the predetermined intended use on the basis of the generated new or changed parameter set.

13. Method according to claim 11 or 12, **characterised in that** the user is prompted via a prompt to request the trained, transformer-based parameterisation model to provide machine-readable instructions based on a query made to the parameterisation model by the user via the computer interface.

14. Method according to claim 13, **characterised in that** the prompt comprises one or more operating instructions relating to one or more operations of the IO-link device according to the predetermined intended use.

15. Method according to claim 14, wherein the operating instructions comprise machine-readable instructions for controlling and/or monitoring the operation of the IO-link device.

16. Computer program product comprising computer-readable instructions that, when executed on a computer, cause the computer to carry out the steps according to any of claims 1 to 15.

## Revendications

1. Procédé mis en œuvre par ordinateur pour le paramétrage automatisable d'au moins un dispositif de terrain (300-310, 415) connecté via une interface numérique à un réseau de communication (315-325) pour une utilisation prévue prédéterminée de l'au moins un dispositif de terrain, **caractérisé en ce que** le procédé est réalisé au moyen d'un assistant de configuration (360, 400) ayant un grand modèle de langage et basé sur l'intelligence artificielle générative, dans lequel le procédé comprend les étapes suivantes :
- l'entraînement d'un modèle de paramétrage basé sur un transformateur (450) sur la base de données relatives au fonctionnement et/ou de données relatives au produit (425) de l'au moins un dispositif de terrain ou l'optimisation d'un modèle de paramétrage basé sur un transformateur existant sur la base de telles données ;
- la fourniture, via une interface informatique (430), du modèle de paramétrage basé sur un transformateur entraîné ou optimisé comprenant au moins un composant transformateur ;
- une communication (440) par un utilisateur avec l'assistant de configuration (400) en langage naturel, via l'interface informatique (430), pour la collecte de données (435) relatives à l'utilisation prévue prédéterminée de l'au moins un dispositif de terrain ;
- la commande (445) au modèle de paramétrage basé sur un transformateur entraîné (450), en utilisant les données collectées pour l'utilisation prévue prédéterminée, pour délivrer en sortie des données de paramétrage optimisées (455) ;
- la délivrance (445) des données de paramétrage optimisées (455) délivrées en sortie par le modèle de paramétrage basé sur un transformateur (450) pour le paramétrage automatisable de l'au moins un dispositif de terrain (300-310, 415).

2. Procédé selon la revendication 1, dans lequel l'au moins un dispositif de terrain (300-310, 415) est un dispositif IO Link couplé en communication à un maître IO Link via un système de communication IO Link (315-325).

3. Procédé selon la revendication 1 ou 2, **caractérisé en ce que** le modèle de paramétrage (450) est entraîné à l'aide d'une technologie d'apprentissage profond et/ou d'apprentissage par renforcement.

4. Procédé selon la revendication 3, **caractérisé en ce qu'**un modèle de paramétrage entraîné (450) est en outre généré par échantillonnage à partir d'une distribution de probabilité apprise de valeurs de paramètres.

5. Procédé selon l'une des revendications précédentes, **caractérisé en ce que** des données brutes basées sur un ensemble de paramètres prédéterminé sont prétraitées par un dispositif de pré-traitement afin de fournir les données d'entraînement sur la base de l'ensemble de paramètres.

6. Procédé selon l'une des revendications précédentes, **caractérisé en ce qu'**une commande d'entrée à l'utilisateur comprend un ou plusieurs contexte(s) relatif(s) à d'autres informations relatives à l'utilisation prévue prédéterminée.

7. Procédé selon l'une des revendications précédentes, **caractérisé en ce que** le procédé comprend la mise à jour des données d'entraînement sur la base de l'ensemble de paramètres et la commande du ré-entraînement du modèle de paramétrage basé sur un transformateur entraîné sur la base d'un ensemble de paramètres mis à jour.

8. Procédé selon la revendication 7, **caractérisé en ce que** le ré-entraînement d'un modèle de paramétrage basé sur un transformateur déjà entraîné est un ré-entraînement planifiée, ou une ré-entraînement continu, ou un ré-entraînement déclenché.

9. Procédé selon la revendication 8, **caractérisé en ce que** le ré-entraînement déclenché est basé sur un seuil et un score liés à des instructions de configuration ou de paramétrage fournies par le modèle de paramétrage basé sur un transformateur entraîné.

10. Procédé mis en œuvre par ordinateur pour l'utilisation d'un modèle de paramétrage basé sur un transformateur entraîné (450) selon l'une des revendications précédentes pour générer un ensemble de paramètres (455) adapté pour une utilisation prévue prédéterminée pour le fonctionnement d'au moins un dispositif de terrain (300-310, 415) connecté en communication via une interface numérique d'un réseau de communication (315-325), dans lequel le procédé comprend les étapes suivantes :
- la fourniture à un utilisateur (445) d'un accès à un modèle de paramétrage basé sur un transformateur entraîné (450) au moyen d'un processeur informatique ;
- la réception, via une interface informatique (430), de données d'entrée (435) relatives à l'utilisation prévue prédéterminée ;
- la commande au modèle de paramétrage basé sur un transformateur entraîné (450) d'analyser les données d'entrée et de fournir des instructions pour la génération d'un ensemble de paramètres nouveau ou modifié (455) sur la base du modèle de paramétrage entraîné (450).

11. Procédé selon la revendication 10, dans lequel l'au moins un dispositif de terrain comprend un dispositif IO Link, qui est connecté en communication à un maître IO Link via un système de communication IO Link.

12. Procédé selon la revendication 11, **caractérisé en ce que** l'au moins un dispositif de terrain est automatiquement configuré pour l'utilisation prévue prédéterminée sur la base de l'ensemble de paramètres nouvellement généré ou modifié.

13. Procédé selon la revendication 11 ou 12, **caractérisé en ce que** l'utilisateur est invité à travers une commande d'entrée à demander au modèle de paramétrage basé sur un transformateur entraîné de fournir des instructions lisibles par machine sur la base d'une interrogation faite au modèle de paramétrage par l'utilisateur via l'interface informatique.

14. Procédé selon la revendication 13, **caractérisé en ce que** la commande d'entrée comprend une ou plusieurs instruction(s) de fonctionnement relative(s) à une ou plusieurs opération(s) du dispositif IO Link selon l'utilisation prévue prédéterminée.

15. Procédé selon la revendication 14, dans lequel les instructions de fonctionnement comprennent des instructions lisibles par machine pour commander et/ou surveiller le fonctionnement du dispositif IO Link.

16. Produit programme informatique comprenant des instructions lisibles par ordinateur qui, lorsqu'elles sont exécutées sur un ordinateur, amènent l'ordinateur à réaliser les étapes selon l'une des revendications 1 à 15.
